# EUROPEAN PATENT SPECIFICATION

(11) **EP 3 320 783 B1**
(45) Date of publication and mention of the grant of the patent: **21.08.2024**
(21) Application number: 16821447.6
(22) Date of filing: 07.07.2016
(51) Int. Cl.: A23L 27/00, A23L 5/10, A23L 23/00, A23L 29/30, A23L 29/10, A23L 7/109

(54) **LIQUID FLAVOR ENHANCER AND METHOD FOR COOKING BY HEATING**
FLÜSSIGER GESCHMACKSVERSTÄRKER UND VERFAHREN ZUM KOCHEN DURCH ERHITZEN
REHAUSSEUR DE GOÛT LIQUIDE ET PROCÉDÉ DE CUISSON PAR CHAUFFAGE

(30) Priority: 07.07.2015 JP 2015135827
(43) Date of publication of application: 16.05.2018
(73) Proprietor: Mizkan Holdings Co., Ltd., Handa-shi, Aichi 475-8585 (JP); Mizkan Co., Ltd., Handa-shi, Aichi 475-8585 (JP)
(72) Inventor: FURUNO, Ayana, Handa-shi Aichi 475-8585 (JP)
(74) Representative: Mummery, Thomas Zack
(86) International application number: PCT/JP2016/070085
(87) International publication number: WO 2017/006978

(56) References cited:
- WO-A1-2014/142267
- JP-A- 2000 060 481
- JP-A- 2005 087 014
- JP-A- 2010 017 121
- JP-A- 2013 000 095
- JP-A- 2014 027 926
- JP-A- 2014 103 960
- DATABASE GNPD [online] MINTEL; 29 October 2012 (2012-10-29), ANONYMOUS: "Font de Veau & Demi Glace Sauce for Eggplants and Minced Meat", XP055511867, retrieved from www.gnpd.com Database accession no. 1906287

## Description

### TECHNICAL FIELD

The present invention relates to a liquid seasoning used for cooking, a cooking method, and a cooked food produced by the method.

### BACKGROUND ART

Starch-based foods, such as noodles, and hot pot dishes require cooking that involves heating foodstuffs mixed with seasonings. It has been known that cooking such foods for a long time enhances impregnation of foodstuffs with seasonings, scours astringent saltiness, and brings out umami tastes of the ingredients to enhance "nikomikan (stewed flavor and texture)". In addition to time and efforts, however, long-time cooking may damage the taste of dishes by, for example, the loss of the preferable texture of noodles or by breaking up the ingredients of the hot pot dishes.

Several techniques in view of the above problems have been proposed (refer to, for example, Patent Documents 1 and 2). Patent Document 1 (WO2010/050429) discloses a method of enhancing the flavor of stewed vegetables involving heating an amino acid or a peptide in the presence of uronic acid. Furthermore, Patent Document 2 (WO2009/069738) discloses a method of heating amino acids or peptides in presence of amino sugars.
JP2014103960 relates to a method of improving the flavour of stewed food.
WO2014142267 relates to a flavouring composition for imparting a stew like flavour to food or beverage products.JP2005087014 relates to a pasta sauce.
Database GNPD; "Font de veau & demi glace sauce for eggplants and minced meat" describes a demi-glace sauce.

### CITATION LIST

### PATENT DOCUMENTS

Patent Document 1: WO2010/050429
Patent Document 2: WO2009/069738

### SUMMARY OF INVENTION

### TECHNICAL PROBLEM

The conventional methods described above, however, have a problem in that they cannot be readily used in a variety of dishes because the taste of the dishes varies depending on the materials added. For this reason, it was impossible to provide cooked dishes, such as a starch-based food or a hot pot dish with "stewed flavor and texture" in a freshly cooked state.

Meanwhile, in recent years, a trend toward individual eating has progressed with the diversification of lifestyles, so that needs to provide food in a short time are increasing. For this reason, a versatile technique capable of imparting "stewed flavor and texture" to a freshly cooked dish without a long-time cooking has been desired.

An object of the present invention, which has been made in view of the problems, is to provide a liquid seasoning, a cooking method, and a cooked food capable of imparting a freshly cooked texture and stewed flavor and texture to a heated dish without long-time cooking.

### MEANS TO SOLVE THE PROBLEM

The present inventors, who have made intensive studies to solve the problems, have discovered that addition of predetermined amounts of specific components (oil, salt, emulsifier) and adjustment of the analysis value (Brix, pH, viscosity at 80°C) of the seasonings to a specific range can remarkably increase the "stewed flavor and texture" of a cooked dish. Then, the inventors of the present invention have finally arrived at the following invention through further intensive research based on the above discovery.

It should be understood that the term "stewed flavor and texture" in the specification refers to "mouthfeel achieved by well impregnation of ingredients with seasonings, scouring astringent saltiness, and bringing out umami of the ingredients. The present invention concerns a diluted liquid seasoning comprising oil, sodium chloride, and an emulsifier, the ratio of the emulsifier to the oil being 0.1 weight % or more, wherein the liquid seasoning has a pH of from 4.0 to 7.0, a Brix of from 1 to 15, an oil concentration of from 0.1 weight % to 4 weight %, an emulsifier concentration of 1 weight % or less, and a static viscosity of 100 mPa·s▪g/cm3 or less measured at 80°C.

Another aspect of the present invention concerns a method of cooking a food, comprising using a liquid seasoning containing oil, sodium chloride, and an emulsifier, the ratio of the emulsifier to the oil being 0.1 weight % or more, wherein the liquid seasoning has been adjusted to have a pH of from 4.0 to 7.0, a Brix of from 1 to 15, an oil concentration of from 0.1 weight % to 4 weight %, an emulsifier concentration of 1 weight % or less, and a static viscosity of 100 mPa ·s▪g/cm3 or less measured at 80°C.

As described in detail above, the present invention can impart a freshly cooked texture and a stewed flavor and texture to cooked dishes without cooking a long time. In other words, putting noodles and ingredients in the liquid preparation for cooking of the present invention to cook them can provide cooked dishes with a freshly cooked texture and stewed flavor and texture of the ingredients, which could never been achieved. The present invention can eliminates a long cooking process for imparting a stewed flavor and texture, so that applications other than domestic applications are also expected for industrial applications such as restaurant or ready-made meal.

### BEST MODES FOR CARRYING OUT THE INVENTION

The liquid seasoning, the cooking method, and the cooked food according to the present invention will be described in detail.

The liquid seasoning of the present invention refers to a liquid preparation for cooking previously flavored for the sake of cooking having a cooking process involving heating in a high temperature range, and may be of any type, for example, a concentrated type used after dilution with, for example, water and/or stock (dashi) at the time of cooking for adjustment to an optimum concentration and a straight type used as it is. The liquid seasoning of the present invention may be used in any dish subjected to a cooking process involving heating in a high temperature range, and can be used, for example, in cooking hot pot dishes and starch-based foods (such as noodles).

Examples of hot pot dishes include shabu-shabu (thin slices of beef parboiled in hot soup), sukiyaki, kimuchinabe (kimuchi hot pot stew), yosenabe (mixed hot pot stew), yudofu (tofu hot pot), chankonabe (hot pot stew for sumo wrestlers), tonyunabe (soymilk hot pot stew), curry-nabe (curry hot-pot-stew), gomanabe (hot pot stew flavored with sesame), misonabe (hot pot stew flavored with miso (fermented soybean paste)), motsunabe (hot pot stew made with offal), yofunabe (western-style hot pot stew), oden (Japanese hodgepodge), tonkotsunabe (hot pot stew with pork bone broth), jjigae (Korean stew), sundubu-jjigae (Korean soft tofu stew), zosui (Japanese rice gruel seasoned with soup), risotto, kiritanponabe (rice stick hot pot), chiritorinabe (quadrilateral hot pot stew), ojiya (rice gruel seasoned with miso or soy sauce), and okayu (thin rice porridge). In particular, the present invention is advantageous in that a "stewed flavor and texture" can be readily imparted to the ingredients even in dishes usually required to be cooked for a long time, such as tonkotsunabe and motsunabe. Furthermore, even in dishes such as risotto causing mushing of ingredients for a long-time stewing, cooking can be finished within a short time by the present invention, which allows a preferred texture of the ingredients to be enjoyed.

A starch-based food refers to a food mainly composed of starch or foodstuffs containing a large amount of starch (for example, cereals such as rice, wheat, and potatoes). Examples of the starch-based food include noodles, such as bean-starch vermicelli, rice vermicelli, buckwheat noodles, oatmeal, gnocchi, kudzu-starch noodles, couscous, udon (Japanese wheat noodles), ramen or lamian (Chinese noodles in soup), and pasta; and other food, such as rice, bread, kiritanpo (rice grilled on a skewer), and suiton (flour dumplings). Among them, noodles are preferred because they are compatible with hot pot dishes. In particular, the present invention is advantageous in that a "stewed flavor and texture" can readily be imparted to ingredients (e.g., thick noodles such as udon) which are less impregnated with seasonings.

In the case of cooking with noodles, the liquid preparation for cooking, whose concentration is appropriately adjusted, and the noodles are simultaneously placed in a heating container such as a pot and heated at a high temperature of usually from 80°C to 99°C. The noodles are thereby heated and mixed with the liquid seasoning at the same time as the noodles are cooked by heating, so the seasoning is absorbed and the taste is harmonized. Any kind of noodles may be used, such as dry noodles, chilled noodles, and frozen noodles. These noodles may be directly added to the liquid seasoning and heated. Alternatively, the noodles which have been parboiled with separately prepared hot water are mixed with liquid seasoning to be cooked. Particularly the elasticity of frozen noodles is strong, so that the noodles are less impregnated with seasonings, resulting in necessity of a long-time cooking, to which, therefore, it is meaningful to apply the present invention.

The liquid preparation for cooking according to the present invention may contain various components, such as a pH adjuster, a Brix adjuster, and a viscosity modifier to achieve the above-described analytical value (Brix, pH, viscosity at 80°C), in addition to oil, common salt and an emulsifier. For imparting a desired taste, the liquid preparation for cooking may further contain materials, such as soy sauce, salt, rock salt, sun-dried salt, miso, umami seasoning; dashi (stocks), e.g., konbu dashi (kelp stock), katsuo dashi (bonito stock), shiitake dashi (shiitake mushroom stock), seafood stock, and meat stock; extracts, e.g., meat extract, seafood extract, vegetables extract, konbu (kelp) extract, katsuo (bonito) extract, and shiitake (shiitake mushroom) extract; fermented seasoning, sesame, sake (rice wine), mirin (sweet sake), yuzu (Japanese citron,Citrus yuzu) juice, other fruit juices, oil, soybean milk, high-sweetness sweetener, sugar, vinegar, rice vinegar, cereal vinegar, alcohol vinegar, apple vinegar, grape vinegar, synthetic vinegar, black vinegar, Chinese vinegar, balsamic vinegar, liquid sugar, vegetable paste, red pepper, pepper, ginger, white broth, yeast extract, caramel, brown sugar, soybean, flavors, and spices.

The package of the seasoning normally carries a description indicating whether the seasoning is a straight use product or a concentrated product together with the dilution factor at the time of cooking (or concentration factor). In the present invention, the "straight equivalent" analytical value refers to an analytical value adjusted to an appropriate concentration at the time of cooking using a liquid preparation for cooking. Accordingly, in the case of a straight use product, the analytical value is a concentration of, for example, viscosity or salinity measured without dilution. For example, in the case of the product for 2-fold dilution, the analytical value is a concentration of, for example, static viscosity or salinity measured when 1 part of seasoning is diluted with 1 part of water.

The content of the liquid preparation for cooking according to the present invention may be concentrated and can be used for cooking after appropriately diluting the seasoning at the time of cooking. Furthermore, when vegetables are used as ingredients, the seasoning at the beginning of cooking may be adjusted to a somewhat higher concentration, based on the assumption of thinning of the seasoning by the water from the ingredients. It should be appreciated that the seasoning may be used for cooking at full strength (as a straight use product) without dilution. The concentration factor of the liquid seasoning for cooking of the present invention can be 2 to 20, preferably 3 to 15, more preferably 4 to 10.

The static viscosity of the liquid preparation for cooking according to the present invention is adjusted to be preferably 100 mPa·s*g/cm³ or less, more preferably 80 mPa·s*g/cm³ or less, most preferably 60 mPa·s*g/cm³ or less measured at 80ºC, when the preparation is used as a straight-equivalent liquid seasoning. If the static viscosity at the time of cooking is higher than 100 mPa·s*g/cm³, the fluidity of the seasoning decreases, so that the ingredients are less impregnated with the seasoning, and the desired effect cannot be sufficiently achieved. Although the effect of the present invention can be achieved even when the liquid seasoning has no viscosity at the time of cooking, the liquid seasoning with some viscosity can be preferably picked up by the ingredient more readily. Specifically, the static viscosity at the time of cooking at 80°C is desirably adjusted to 3 mPa·s*g/cm³ or more, particularly 5 mPa·s*g/cm³ or more. In order to attain the above static viscosity during cooking, especially in the case of a liquid seasoning, the viscosity of the concentrated seasoning is adjusted to 10,000 mPa·s or less at 20°C, preferably 7000 mPa·s or less. Liquid seasonings having any viscosity can be used if the static viscosity can be adjusted to a predetermined value at the time of dilution-heating by the properties of the viscosity modifier. As mentioned above, the static viscosity at 80°C is influenced by the viscosity (mPa·s) and the density (g/cm³) of the seasoning preparation for cooking. Although adjustment of the viscosity of the seasoning liquid around room temperature (20°C) is a commonly practiced technique, the viscosity is known to vary depending on the temperature of the seasoning preparation for cooking, and the rate of change greatly varies depending on the type of the viscosity modifier contained in the seasoning preparation for cooking. Furthermore, the rate of change in viscosity upon heating varies depending on the components contained in the liquid seasoning itself before the addition of the viscosity modifier, so that it is difficult to estimate the viscosity of liquid preparation for cooking at 80°C from the viscosity at 20°C. In addition, the density value of the seasoning preparation for cooking varies with temperature, so that it is difficult to estimate the density at 80°C from the density at 20°C. In the present invention, the desired effect can be achieved if the static viscosity of the seasoning liquid at 80°C is adjusted to a predetermined ratio. No inventive idea has not been proposed for adjusting the static viscosity at the time of heating, and thus it was not easily conceivable to adjust the static viscosity at 80°C of the liquid preparation for cooking from the viscosity and density at room temperature of the liquid preparation for cooking.

The present invention is characterized by an observed value of the static viscosity measured at 80°C. An example method of measuring a suitable static viscosity that barely influences the temperature of the sample during the time of measuring is measuring method using a tuning-fork vibration viscometer (for example, a model "SV-10" manufactured by A & D). The static viscosity with this viscometer is determined as follows. A liquid preparation for cooking is diluted to a concentration at the time of cooking, and an appropriate amount of diluted preparation is placed in a sample container, and then the container is adjusted at 80°C. The heights of the right and left vibrators are adjusted such that the liquid level is at the centers of the necks in order to make the liquid level of the sample horizontal before measuring. In the vibration viscometer, the product [viscosity×density] called "static viscosity" can be calculated from the measurement principle. With respect to the "static viscosity", for example, refer to Non-patent Document 1: Naoto Izumo, Atsushi Koiwai, "Seinendo (sv) to shindoshiki nendokei ni tsuite [Static viscosity (sv) and vibration viscometer]", 24th Sensing Forum Material, SICE October 25, 2007, Vol. 24, p. 141-146.

The viscosity of liquid seasonings before dilution is measured with a type-B viscometer (for example, "B-II" manufactured by Toki Sangyo Co., Ltd.). For example, the liquid preparation for cooking is diluted to a concentration at the time of cooking. An appropriate amount of diluted preparation is placed in a sample container of a type-B viscometer and then the container is adjusted at 20°C. The container is placed in a type-B viscometer. The viscosity can be measured with a rotor suitable for the viscosity range to be determined.

Any viscosity modifier can be used that allows the static viscosity of straight-equivalent liquid seasoning measured at 80°C to falls within a specified range. For example, one or more modifiers can be selected from the group consisting of gum arabic, alginic acid, sodium alginate, carrageenan, karaya gum, agar, locust bean gum, xanthan gum, guar gum, gellan gum, cellulose, tamarind seed gum, tara gum, tragacanth gum, pullulan, pectin, chitin, chitosan, and modified starch. In other words, the static viscosity value of the foodstuff before the addition of the viscosity modifier varies inherently depending on the temperature change. One or more viscosity modifiers can be selected such that the static viscosity falls within a preferred viscosity range of the present invention measured at 80°C. Among them, xanthan gum (for example, "ECHO GUM" manufactured by DSP Gokyo Food & Chemical Co., Ltd.) is preferred because its components are barely decomposed at the time of cooking and it has high salt resistance.

The pH of the liquid preparation for cooking of the present invention is preferably adjusted to 4.0 to 7.0, more preferably 4.5 to 7.0, most preferably 5.0 to 7.0 when the preparation is used as a straight-equivalent liquid seasoning. A pH of the seasoning lower than 4.0 may impair the stability of the viscosity modifier and may decrease the viscosity during the storage of the seasoning. A pH exceeding 7.0 may lead to foreign taste of the product. Use of a seasoning adjusted to the above range enables the pH of a seasoning diluted in terms of straight-equivalent liquid seasoning during cooking to be adjustable in a range of 4.0 to 7.0, and thus exhibits the advantageous effect of the present invention during cooking.

Any pH adjuster can be used for the liquid preparation for cooking according to the present invention. Examples include organic acids, such as acetic acid, citric acid, succinic acid, phytic acid, phosphoric acid, gluconic acid, malic acid, tartaric acid, carbonic acid, glutamic acid, and inosinic acid; amino acids; nucleic acids; salts of these organic acids, amino acids, and nucleic acids; and foods or food additives containing these acids. These pH adjusters can be used alone or in combination. For example, potassium carbonate (for example, "potassium carbonate FG" manufactured by Asahi Glass Co., Ltd.) is used for seasoning having a low pH value, and acetic acid ("cereal vinegar" manufactured by Mizkan Holding Co., Ltd.) is used for seasoning having a high pH value. In other words, although foodstuffs have different pH values before the addition of the pH adjuster, one or more pH adjusters are selected such that the final pH value is within the preferable range of the present invention.

The Brix of the liquid preparation for cooking according to the present invention is adjusted in the range of preferably 1 to 15, more preferably in the range of 2 to 11, most preferably 3 to 8 when the preparation is used as a straight-equivalent liquid seasoning. A Brix adjusted to this range exhibits the advantageous effect of the present invention at the time of cooking. A significantly low Brix may preclude impregnation of the ingredients with the seasoning at the time of cooking. A significantly high Brix may generate scorched ingredients at the time of cooking. The Brix of the liquid preparation for cooking in the concentrated state is adjusted in the range of 3 to 35, preferably 5 to 25, more preferably 10 to 20.

Any Brix adjuster that allows the Brix to falls within a specified range can be used for the liquid preparation for cooking according to the present invention. For example, one or more adjuster can be selected from fructose glucose liquid sugar, glucose fructose liquid sugar, sugar, glucose, maltose, starch syrup, sugar alcohol, and trehalose. In other words, although foodstuffs have different Brix values before the addition of the Brix adjuster, one or more Brix adjusters are selected such that the Brix of the liquid preparation for cooking is finally within the preferable range of the present invention. Among these Brix adjusters, saccharides derived from starch, such as starch syrup (for example, "starch syrup" from Nihon Starch Co., Ltd.) can markedly enhance the "stewed flavor and texture". Although any amount of starch syrup can be added, addition of about 0.1 mass% into the liquid preparation for cooking diluted into straight-equivalent liquid seasoning at the time of cooking remarkably increase the stewed flavor and texture. A larger amount of starch syrup may be added. However, addition of an amount of about 5 mass% into the liquid preparation for cooking which has been diluted into straight-equivalent liquid seasoning at the time of cooking causes the taste of starch syrup to tend to be felt and impairs the taste balance. Accordingly, it is preferred that the starch syrup be added in an amount of 0.1 mass% to 5 mass%, more preferably 0.2 mass% to 4 mass%, most preferably from 0.4 mass% to 2 mass% into straight-equivalent liquid seasoning diluted from the liquid preparation for cooking.

Any oil the concentration of which is adjusted within a specified range can be used in the present invention. For example, one or more oils can be selected from rapeseed oil, soybean oil, corn oil, sesame oil, safflower oil, rice oil, chicken oil, lard, egg yolk oil, and fish oil. For example, rapeseed oil (for example, "Nisshin Canola Oil" manufactured by The Nisshin OilliO Group, Ltd.) has mild flavor and can be used for more general purposes. Furthermore, even in the case of using a foodstuff containing oil, such as meat extract or baitang, one or more materials can be selected such that the sum of the oil derived from these materials and the above-mentioned oil is finally within the preferable range of the oil content of the present invention. The oil content can be calculated by analysis of the amount of "lipid" by a Soxhlet extraction method according to "3. Lipid (1) Extraction and quantification method of fat and oil" in Standard Methods of Analysis in Food Safety Regulation.

The oil concentration of the liquid preparation for cooking of the present invention is preferably adjusted to 0.1 mass% to 4 mass%, more preferably 0.1 mass% to 3 mass%, most preferably 0.1 mass% to 2 mass%, when the preparation is used as a straight-equivalent liquid seasoning. Cooked dishes tend to be greasy if the oil concentration in the seasoning liquid is higher than 4 mass% at the time of cooking in straight-equivalent liquid seasoning, which is not preferable. More than a certain amount of oil is preferable to impart a deep flavor to the dish; hence, it is desirable that the oil concentration in the seasoning liquid at the time of cooking is adjusted to 0.1 mass% or more, particularly 0.2 mass% or more. In order to attain the oil concentration in the seasoning liquid at the above-mentioned cooking, the oil concentration of the seasoning in the concentrated state is adjusted within the range of desirably 0.1 to 25 mass%, preferably 0.1 to 20 mass%.

Any emulsifier may be used in the present invention. Examples include starch sodium octenyl succinate, lecithin, saponin, glycerin fatty acid ester, sucrose fatty acid ester, sorbitan fatty acid ester, and sodium caseinate. Among these, lecithin (e.g., plant lecithin, enzyme-treated lecithin, and enzyme-decomposed lecithin) is more suitable for this technology because its flavor is compatible with oil. Any lecithin, for example, lecithin derived from soybean or egg yolk may be used if its concentration is adjusted within a specified range. In addition to refined lecithin, enzyme-degraded lecithin, enzyme-treated lecithin, and/or lecithin-containing foods, such as egg yolk and soybeans can also be used. In the case of using a foodstuff containing lecithin, such as egg yolk and soy milk, one or more materials can be selected such that the sum of the lecithin derived from these materials and the above-mentioned lecithin can finally be within the preferable range of the lecithin content of the present invention. For example, "SLP-LPC 70 H (phospholipid content: 97% or more, lysis rate: 70% or more)" manufactured by Tsuji Oil Mills, Co., Ltd. can be used.

Furthermore, it is desirable that 20% mass% or more, preferably 40% mass% or more, more preferably 60% mass% or more lysed lecithin is contained in lecithin. The mass ratio of lysed lecithin to common salt is desirably 1:2 to 1:2000, more desirably 1:4 to 1:500. The advantageous effect of the present invention is more reliably exhibited if the above-mentioned range is satisfied.

Lysed lecithin can be produced by hydrolysis of lecithin with phospholipase A2 or A1, which is a phospholipid degrading enzyme, to liberate the fatty acids at position 2 or 1 of the phospholipid. Alternatively, lecithin lysed with a catalyst other than enzymes (acid, alkali, and others) can be used. In this case, the rate of substitution of phospholipids for lysophospholipids is referred to as lysis rate. In detail, the proportion of lysed lecithin in this lecithin is the mass percentage of lysolecithin to total lecithin. Phospholipase A is added to lecithin, and then phospholipase treatment is performed, such that the lecithin containing the phospholipase A is lysed to yield lysed lecithin. This enzyme treatment may be carried out in a conventional manner, and phospholipase A2 is commonly used as an enzyme. Alternatively, any enzyme can be used that can achieve a predetermined lysis rate.

The emulsifier concentration of the liquid preparation for cooking according to the present invention is adjusted to be preferably 1 mass% or less, more preferably 0.7 mass% or less when the preparation is used as a straight-equivalent liquid seasoning. If the proportion of the emulsifier in the liquid seasoning is more than 1 mass% at the time of cooking in straight-equivalent liquid seasoning, the dish tends to have undesirable foreign taste. The mass ratio of the emulsifier to the oil in the straight-equivalent liquid seasoning at the time of cooking is 0.1 % or more, desirably 0.2 % or more, preferably 0.4 % or more, more preferably 1.0 % or more. In the case where the ratio of the emulsifier to the oil is less than 0.1%, the advantageous effect of the present invention cannot be sufficiently exhibited. In order to attain the above mass ratio of the emulsifier to the oil in the liquid seasoning at the time of cooking, the mass ratio of the emulsifier to the oil in the concentrated liquid seasoning is adjusted to 0.1% to 5.0%, preferably 0.2% to 3.0%.

The salt concentration in the liquid preparation for cooking according to the present invention is preferably adjusted such that the concentration of the straight-equivalent liquid seasoning at the time of cooking is 0.9 mass% to 1.5 mass%, more preferably 1.0 mass% to 1.4 mass%. In the case of using foodstuffs containing salt, such as miso and soy sauce, one or more materials can be selected such that the sum of the salt derived from these materials and the above-mentioned salt is finally within the preferable range of the salt concentration of the present invention. In order to attain the above salt concentration in the seasoning liquid at the time of cooking, the salt concentration in the concentrated liquid seasoning is adjusted to, for example, 1.0 mass% to 10 mass%, preferably 3.0 mass% to 8.0 mass%.

The liquid preparation for cooking of the present invention may be packed in any commonly used liquid seasoning container, such as a retort pouch, a PET bottle, a glass bottle, a can, a paper pack, an aluminum pouch, and a vinyl bag. Since the static viscosity of the straight-equivalent liquid seasoning during cooking is required to have a predetermined value, the viscosity of the liquid preparation for cooking is preferably adjusted with a material having high heat resistance, such as xanthan gum and modified starch when a container requiring retort sterilization is filled with the preparation.

In the production of the liquid preparation for cooking according to the present invention, it is desirable that the viscosity modifier is swelled with water and then other materials are added to be mixed homogeneously. Furthermore, after the materials are mixed, the viscosity modifier can be gelatinized by heat according to the properties of the viscosity modifier (e.g., 80°C for 3 minutes for processed starch). In the above process, materials were uniformly mixed, and the viscosity, the Brix, and the pH are adjusted, and oil, salt and emulsifier were added into specified concentrations to prepare a liquid seasoning. After cooling, water is added to the liquid seasoning such that the concentration factor is adjusted to that of the product of desired liquid preparation for cooking. The present invention can impart a freshly cooked texture and a stewed flavor and texture to cooked dishes without cooking a long time. Preferred foods suitable for cooking include pasta, "foods mainly composed of starch", "foods mainly composed of wheat flour", "foods mainly composed of gluten-containing starch", "noodles mainly composed of gluten-containing starch, "noodles", "nerimono (raw paste)", "pasta", "noodle-like pasta", "spaghetti", and "udon". In other words, these foods (for example, "noodles mainly composed of gluten-containing starch" such as pasta) are softened to lose the "freshly cooked texture" when heated for a long time. However, according to the present invention, components of the seasoning liquid can be infiltrated into the noodle by cooking for a short period of time. For this reason, it is possible to prepare a food (in this case, pasta) having incompatible characteristics of "fresh cooked texture" and "taste as if cooked for a long time". Furthermore, according to the present invention, for example, cooking boiled pasta for a short time in the pasta sauce of the present invention can prepare pasta having a taste of pasta as if cooked for a long time while maintaining a good texture.

### EXAMPLES

Examples of the liquid seasoning, the method of cooking, and the cooked food according to the present embodiment will be described in more detail below.

### <EXPERIMENTAL EXAMPLE 1>

In EXPERIMENTAL EXAMPLE 1, several concentrated liquid seasonings for noodles (for udon) were prepared according to the formulation shown in Tables 1-1 and 1-2. In detail, a thickener (xanthan gum), oil materials (rapeseed oil and chicken oil), emulsifier (lecithin), common salt, and other seasonings (umami seasoning, chicken extract, soup stock (dashi), and cereal vinegar) were prepared. The thickener was swollen in water, and then other materials (the oil materials, lecithin, common salt, and other seasonings) were added and mixed homogeneously. After mixing the materials, the liquid seasoning was cooled and an appropriate volume of water was added to prepare a sample liquid preparation having a desired concentration factor (4.6 in this example) for cooking for udon.

The xanthan gum content was set at several levels (2.7, 6.4, and 10.0 parts by mass), and the lecithin content was set at several levels (0.0, 0.7, 10.4, and 16.0 parts by mass) to prepare 12 samples in total. These concentrated samples were analyzed to determine the lecithin concentration, oil concentration, pH, Brix, salt concentration, and viscosity at 20°C. The results are shown in Tables 1-1 and 1-2. Furthermore, these samples were diluted into concentrations at the time of cooking, and were analyzed based on the straight-equivalent liquid seasonings to determine the lecithin concentration, the oil concentration, the ratio of the lecithin to the oil, the pH, the Brix, the salt concentration, the ratio of lysed lecithin to common salt, and the static viscosity at 80°C. The results are also shown in Tables 1-1 and 1-2.

According to the analytical results of liquid preparations for cooking (straight-equivalent liquid seasonings), the lecithin concentration was 0.0 mass% at the lowest (Liquid preparations for cooking 1, 5, and 9) and 0.34 mass% at the highest (Liquid preparations for cooking 4, 8, and 12). The oil concentration had a constant value (1.5 mass%). Consequently, the mass rate of the lecithin to the oil was 0.0 % at the lowest (Liquid preparations for cooking 1, 5, and 9) and 21.8 % at the highest (Liquid preparations for cooking 4, 8, and 12). The pH was 5.10 at the lowest (Liquid preparation for cooking 4) and 5.19 at the highest (Liquid preparation for cooking 10). The Brix was 2.9 at the lowest (Liquid preparation for cooking 1) and 3.8 at the highest (Liquid preparations for cooking 3, 7, and 8). The salt concentration was 0.9 mass% at the lowest (Liquid preparation for cooking 10) and 1.5 mass% at the highest (Liquid preparation for cooking 7). The ratio of lysed lecithin to common salt was 0.0 mass% at the lowest (Liquid preparations for cooking 1, 5, and 9) and 22.7 mass% at the highest (Liquid preparations for cooking 8 and 12). Liquid preparations for cooking 1 to 4 showed relatively low viscosity, Liquid preparations for cooking 5 to 8 showed comparatively medium viscosity, and Liquid preparations for cooking 9 to 12 showed relatively high viscosity. The minimum static viscosity at 80°C was 3 mPa·s*g/cm³ in Liquid preparation for cooking 1, and the maximum value was 56 mPa·s*g/cm³ in Liquid preparation for cooking 11.

Using each sample of the resulting liquid preparations for cooking, udon noodles were actually cooked for a relatively short period of time (specifically heating at 80°C for 1 minute). A sensory evaluation was conducted to taste and evaluate the finished udon noodles (i.e., "cooked udon" as "cooked food"). This sensory evaluation scored six items, i.e., "deliciousness", "mellowness", "astringent saltiness", "richness (kokumi)", "incongruous smell" and "stewed flavor and texture", at five levels, respectively. In detail, five levels for "deliciousness" are 5 for delicious, 4 for somewhat delicious, 3 for ordinary, 2 for not so delicious, and 1 for not delicious. Five levels for "mellowness" are 5 for mellow, 4 for somewhat mellow, 3 for ordinary, 2 for rather not mellow, and 1 for not mellow. Five levels for "astringent saltiness" are 5 for no astringent saltiness, 4 for less astringent saltiness, 3 for ordinary, 2 for somewhat remaining astringent saltiness, and 1 for remaining astringent saltiness. Five levels for "richness" are 5 for rich, 4 for somewhat rich, 3 for ordinary, 2 for rather not rich, and 1 for not rich. Five levels for "incongruous smell" are 5 for weak incongruous smell, 4 for slightly weak incongruous smell, 3 for ordinary, 2 for slightly strong incongruous smell, and 1 for strong incongruous smell. Five levels for "stewed flavor and texture" are 5 for noticeable stewed flavor and texture, 4 for considerable stewed flavor and texture, 3 for ordinary, 2 for slight stewed flavor and texture, and 1 for no stewed flavor and texture. The arithmetic mean values of the scores of 20 participants in total were calculated by rounding off of the number of the first decimal place to summarize the results of the evaluations.

The details of the method of the sensory evaluation (sensory test) are as follows. The sensory test was conducted by trained sensory assessors. In a training of sensory assessors, identification training such as A) to C) below was conducted. Highly qualified assessors were selected and objective sensory tests were conducted by 20 assessors in total.
A) a taste identification test for accurately identifying each taste sample from seven samples consisting of five aqueous solution samples each having a concentration close to the threshold value of each component for five tastes (sweet taste: taste of sugar, sour taste: taste of tartaric acid, umami: taste of sodium glutamate, salty taste: taste of sodium chloride, and bitter taste: taste of caffeine) and two distilled water samples;
B) a level difference identification test for accurately identifying the level difference of five saline solution samples and acetic acid aqueous solution samples slightly different in concentration; and
C) a three-point identification test for accurately identifying the soy sauce sample manufactured by Company B from three samples (two samples by Company A and one sample by Company B). Then, comprehensive evaluation was then conducted based on the results of the evaluation s of these six items by the sensory assessors. In the comprehensive evaluation, the results were ranked into five levels: A for very delicious, B for delicious, C for ordinary, D for slightly delicious, and E for not delicious. From the results of these six items, compatibility between a group of five items, i.e., "deliciousness", "mellowness", "astringent saltiness", "richness", and "incongruous smell", and the remaining item "stewed flavor and texture" were evaluated comprehensively at five levels (5 for good, 4 for somewhat good, 3 for ordinary, 2 for somewhat bad, and 1 for bad). The arithmetic mean values of the scores of a total of 20 participants were calculated by rounding off of the number of the first decimal place, and the evaluation was ranked into the following criteria: 5 points for A, 4 points for B, 3 points for C, 2 points for D, and 1 point for E.

**[Table 1-1]**

| | | Low viscosity | | | |
|---|---|---|---|---|---|
| | | Liquid cooking preparation 1 | Liquid cooking preparation 2 | Liquid cooking preparation 3 | Liquid cooking preparation 4 |
| **<Formulations of liquid cooking preparations >** | | | | | |
| Xanthan gum | Parts by mass | 2.7 | 2.7 | 2.7 | 2.7 |
| Rapeseed oil | Parts by mass | 50 | 50 | 50 | 50 |
| Chicken oil | Parts by mass | 21 | 21 | 21 | 21 |
| Lecithin (emulsifier) | Parts by mass | 0.0 | 0.7 | 10.4 | 16.0 |
| Egg yolk | Parts by mass | 0 | 0 | 0 | 0 |
| Starch syrup | Parts by mass | 0 | 0 | 0 | 0 |
| Umami seasoning | Parts by mass | 23 | 23 | 23 | 23 |
| Common salt | Parts by mass | 51 | 51 | 51 | 51 |
| Chicken extract | Parts by mass | 50 | 50 | 50 | 50 |
| Soup stock (dashi) | Parts by mass | 10 | 10 | 10 | 10 |
| Cereal vinegar | Parts by mass | 10 | 10 | 10 | 10 |
| Water | | Remnant | Remnant | Remnant | Remnant |
| Total | Parts by mass | 1000 | 1000 | 1000 | 1000 |
| **<Analytical values of liquid cooking preparations >** | | | | | |
| Lecithin concentration | mass % | 0.00% | 0.07% | 1.01% | 1.55% |
| Oil concentration | mass % | 7.1% | 7.1% | 7.1% | 7.1% |
| pH | | 5.00 | 4.97 | 5.00 | 5.00 |
| Brix | | 15.3 | 15.2 | 15.2 | 15.2 |
| Salt concentration | mass % | 6.2 | 6.1 | 6.0 | 5.5 |
| Viscosity (20°C) | mPa·s | 514 | 528 | 521 | 526 |
| **<Analytical values of straight-equivalent liquid seasonings >** | | | | | |
| Dilution factor | | 4.6 | 4.6 | 4.6 | 4.6 |
| Lecithin concentration | mass % | 0.00% | 0.02% | 0.22% | 0.34% |
| oil concentration | mass % | 1.5% | 1.5% | 1.5% | 1.5% |
| Ratio of lecithin to oil | mass % | 0.0% | 1.0% | 14.2% | 21.8% |
| pH | | 5.11 | 5.13 | 5.15 | 5.10 |
| Brix | | 2.9 | 3.2 | 3.8 | 3.5 |
| Salt concentration | mass % | 1.4 | 1.3 | 1.3 | 1.2 |
| Ratio of lysed lecithin to common salt | mass % | 0.0% | 0.9% | 12.5% | 21.2% |
| Static viscosity (80°C) | mPa·s·g/cm³ | 3 | 4 | 5 | 5 |
| **<Foodstuff used>** | | | | | |
| | | Udon | Udon | Udon | Udon |
| **<Sensory evaluation>** | | | | | |
| Deliciousness | | 3 | 4 | 4 | 3 |
| Mellowness | | 3 | 4 | 5 | 4 |
| Astringent saltiness | | 1 | 3 | 4 | 4 |
| Koku (richness) | | 3 | 4 | 4 | 4 |
| Lecithin smell | | 5 | 5 | 3 | 2 |
| Stewed flavor and texture | | 1 | 4 | 5 | 4 |
| Comprehensive evaluation | | D | B | A | B |

**[Table 1-2]**

| | | Medium viscosity | | | |
|---|---|---|---|---|---|
| | | Liquid cooking preparation 5 | Liquid cooking preparation 6 | Liquid cooking preparation 7 | Liquid cooking preparation 8 |
| **<Formulations of liquid cooking preparations >** | | | | | |
| Xanthan gum | Parts by mass | 6.4 | 6.4 | 6.4 | 6.4 |
| Rapeseed oil | Parts by mass | 50 | 50 | 50 | 50 |
| Chicken oil | Parts by mass | 21 | 21 | 21 | 21 |
| Lecithin (emulsifier) | Parts by mass | 0.0 | 0.7 | 10.4 | 16.0 |
| Egg yolk | Parts by mass | 0 | 0 | 0 | 0 |
| Starch syrup | Parts by mass | 0 | 0 | 0 | 0 |
| Umami seasoning | Parts by mass | 23 | 23 | 23 | 23 |
| Common salt | Parts by mass | 51 | 51 | 51 | 51 |
| Chicken extract | Parts by mass | 50 | 50 | 50 | 50 |
| Soup stock (dashi) | Parts by mass | 10 | 10 | 10 | 10 |
| Cereal vinegar | Parts by mass | 10 | 10 | 10 | 10 |
| Water | | Remnant | Remnant | Remnant | Remnant |
| Total | Parts by mass | 1000 | 1000 | 1000 | 1000 |
| **<Analytical values of liquid cooking preparations >** | | | | | |
| Lecithin concentration | mass % | 0.00% | 0.07% | 1.01% | 1.55% |
| Oil concentration | mass % | 7.1% | 7.1% | 7.1% | 7.1% |
| pH | | 5.03 | 5.02 | 5.00 | 5.12 |
| Brix | | 15.6 | 15.5 | 15.6 | 15.4 |
| Salt concentration | mass % | 6.1 | 6.0 | 6.2 | 6.0 |
| Viscosity (20°C) | mPa·s | 2184 | 2205 | 2100 | 2121 |
| **<Analytical values of straight-equivalent liquid seasonings >** | | | | | |
| Dilution factor | | 4.6 | 4.6 | 4.6 | 4.6 |
| Lecithin concentration | mass % | 0.00% | 0.02% | 0.22% | 0.34% |
| oil concentration | mass % | 1.5% | 1.5% | 1.5% | 1.5% |
| Ratio of lecithin to oil | mass % | 0.0% | 1.0% | 14.2% | 21.8% |
| pH | | 5.11 | 5.13 | 5.15 | 5.15 |
| Brix | | 3.2 | 3.5 | 3.8 | 3.8 |
| Salt concentration | mass % | 1.3 | 1.4 | 1.5 | 1.1 |
| Ratio of lysed lecithin to common salt | mass % | 0.0% | 0.8% | 11.4% | 22.7% |
| Static viscosity (80°C) | mPa·s·g/cm³ | 25 | 30 | 28 | 30 |
| **<Foodstuff used>** | | | | | |
| | | Udon | Udon | Udon | Udon |
| **<Sensory evaluation>** | | | | | |
| Deliciousness | | 3 | 5 | 4 | 3 |
| Mellowness | | 3 | 5 | 4 | 4 |
| Astringent saltiness | | 1 | 4 | 5 | 4 |
| Koku (richness) | | 3 | 4 | 5 | 4 |
| Lecithin smell | | 5 | 4 | 4 | 2 |
| Stewed flavor and texture | | 1 | 5 | 5 | 4 |
| Comprehensive evaluation | | D | A | A | B |

The results of sensory evaluation, such as astringent saltiness, richness, and stewed flavor and texture, of Liquid preparation for cooking 2, 3, 4, 6, 7, 8, 10, and 11 containing an appropriate amount of lecithin are generally good, being rated as "B" or higher in terms of the comprehensive evaluation. Among them, Liquid preparations for cooking 3, 6, 7, and 10 were classified into "A" in terms of the comprehensive evaluation, with sufficient stewed flavor and texture (5 points). Liquid preparations for cooking 4, 8 and 12 containing a slightly higher lecithin had a relatively high evaluation of "stewed flavor and texture", but the "incongruous smell" stood out, and the comprehensive evaluation tended to be somewhat lower. In contrast, Liquid preparations for cooking 1, 5 and 9 which do not contain lecithin at all have low evaluations of "astringent saltiness" and "stewed flavor and texture", resulting in low comprehensive evaluation.

As apparent from these results, it was demonstrated that addition of predetermined amounts of specific components (oil, common salt, and lecithin) and adjustment of the analytical value (Brix, pH, and viscosity) of the liquid preparations for cooking to a specific range can impart a freshly cooked texture and a stewed flavor and texture to udon without long-time cooking.

### <EXPERIMENTAL EXAMPLE 2>

In EXPERIMENTAL EXAMPLE 2, several concentrated liquid preparations for cooking for udon noodles were prepared according to the formulation shown in Table 2. Samples of liquid preparations for cooking were prepared as in EXPERIMENTAL EXAMPLE 1. In this example, the content of starch syrup, which is one of the Brix adjusters, was set at several levels (20, 40, and 60 parts by mass) and the content of lecithin was set at several levels (0.7, 10.4, and 16.0 parts by mass) to prepare five samples in total. These concentrated samples were then analyzed to determine the lecithin concentration, oil concentration, pH, Brix, salt concentration, and viscosity at 20°C. The results are shown in Table 2. Furthermore, these samples were diluted so as to have concentrations at the time of cooking, and were analyzed based on the straight-equivalent liquid seasonings to determine the lecithin concentration, the oil concentration, the ratio of the lecithin to the oil, the pH, the Brix, the salt concentration, the ratio of lysed lecithin to common salt, and the static viscosity at 80°C. The results are also shown in Table 2.

According to the analytical results of each sample of liquid preparations for cooking (straight-equivalent liquid seasonings), the lecithin concentration was 0.02 mass% at the lowest (Liquid preparation for cooking 13) and 0.34 mass% at the highest (Liquid preparation for cooking 15). The oil concentration was a constant value (1.5 mass%). Consequently, the rate of the lecithin to the oil was 1.0 mass% at the lowest (Liquid preparation for cooking 13) and 21.8 mass% at the highest (Liquid preparation for cooking 15). The pH was 5.12 at the lowest (Liquid preparation for cooking 13) and 5.21 at the highest (Liquid preparation for cooking 14). The Brix was 3.8 at the lowest (Liquid preparation for cooking 15) and 5.0 at the highest (Liquid preparation for cooking 17). The salt concentration was 1.1 mass% at the lowest (Liquid preparation for cooking 17) and 1.4 mass% at the highest (Liquid preparation for cooking 15). The ratio of lysed lecithin to common salt was 0.9 mass% at the lowest (Liquid preparation for cooking 13) and 17.8 mass% at the highest (Liquid preparation for cooking 15). Liquid preparations for cooking 13 to 17 all showed medium viscosity, and the minimum static viscosity at 80°C was 30 mPa·s*g/cm³ of Liquid preparation for cooking 13, and the maximum value was 36 mPa·s*g/cm³ of Liquid preparation for cooking 16.

Udon was actually cooked using each sample of the resulting Liquid preparations for cooking, and sensory evaluation was carried out to taste and evaluate the finished udon (i.e., "cooked food") as in EXPERIMENTAL EXAMPLE 1. The results are also shown in Table 2.

**[Table 2]**

| | | High viscosity | | | |
|---|---|---|---|---|---|
| | | Liquid cooking preparation 9 | Liquid cooking preparation 10 | Liquid cooking preparation 11 | Liquid cooking preparation 12 |
| **<Formulations of liquid cooking preparations >** | | | | | |
| Xanthan gum | Parts by mass | 10.0 | 10.0 | 10.0 | 10.0 |
| Rapeseed oil | Parts by mass | 50 | 50 | 50 | 50 |
| Chicken oil | Parts by mass | 21 | 21 | 21 | 21 |
| Lecithin (emulsifier) | Parts by mass | 0.0 | 0.7 | 10.4 | 16.0 |
| Egg yolk | Parts by mass | 0 | 0 | 0 | 0 |
| Starch syrup | Parts by mass | 0 | 0 | 0 | 0 |
| Umami seasoning | Parts by mass | 23 | 23 | 23 | 23 |
| Common salt | Parts by mass | 51 | 51 | 51 | 51 |
| Chicken extract | Parts by mass | 50 | 50 | 50 | 50 |
| Soup stock (dashi) | Parts by mass | 10 | 10 | 10 | 10 |
| Cereal vinegar | Parts by mass | 10 | 10 | 10 | 10 |
| Water | | Remnant | Remnant | Remnant | Remnant |
| Total | Parts by mass | 1000 | 1000 | 1000 | 1000 |
| **<Analytical values of liquid cooking preparations >** | | | | | |
| Lecithin concentration | mass % | 0.00% | 0.07% | 1.01 % | 1.55% |
| Oil concentration | mass % | 7.1% | 7.1% | 7.1% | 7.1% |
| pH | | 5.02 | 5.02 | 5.01 | 5.01 |
| Brix | | 15.9 | 16.1 | 16.0 | 15.9 |
| Salt concentration | mass % | 6.2 | 6.1 | 6.2 | 6.0 |
| Viscosity (20°C) | mPa·s | 4738 | 4706 | 4763 | 4696 |
| **<Analytical values of straight-equivalent liquid seasonings >** | | | | | |
| Dilution factor | | 4.6 | 4.6 | 4.6 | 4.6 |
| Lecithin concentration | mass % | 0.00% | 0.02% | 0.22% | 0.34% |
| oil concentration | mass % | 1.5% | 1.5% | 1.5% | 1.5% |
| Ratio of lecithin to oil | mass % | 0.0% | 1.0% | 14.2% | 21.8% |
| pH | | 5.15 | 5.19 | 5.18 | 5.18 |
| Brix | | 3.7 | 3.7 | 3.7 | 3.7 |
| Salt concentration | mass % | 1.2 | 0.9 | 1.4 | 1.1 |
| Ratio of lysed lecithin to common salt | mass % | 0.0% | 1.3% | 12.1% | 22.7% |
| Static viscosity (80°C) | mPa·s·g/cm³ | 48 | 54 | 56 | 54 |
| **<Foodstuff used>** | | | | | |
| | | Udon | Udon | Udon | Udon |
| **<Sensory evaluation>** | | | | | |
| Deliciousness | | 3 | 5 | 5 | 3 |
| Mellowness | | 3 | 5 | 4 | 4 |
| Astringent saltiness | | 3 | 5 | 5 | 5 |
| Koku (richness) | | 3 | 5 | 4 | 4 |
| Lecithin smell | | 5 | 5 | 4 | 2 |
| Stewed flavor and texture | | 1 | 4 | 3 | 3 |
| Comprehensive evaluation | | E | B | B | C |

The results of the sensory evaluation, such as astringent saltiness, richness, and stewed flavor and texture, of Liquid preparations for cooking 13 to 17 were improved overall as compared to those of EXPERIMENTAL EXAMPLE 1, rated as "A" in the comprehensive evaluation. The content of starch syrup in the liquid preparation for cooking (the diluted liquid seasoning to the straight-equivalent liquid seasoning at the time of cooking) was 0.43 mass% in Liquid preparations for cooking 13 to 15, 0.87 mass% in Liquid preparation for cooking 16, and 1.30 mass% in Liquid preparation for cooking 17. Thus, it was found that the addition of an appropriate amount of starch syrup can significantly enhance the stewed flavor and texture. In place of udon, spaghetti "Ma·Ma (registered trademark) Spaghetti 1.4 mm (manufactured by Nisshin Seifun Group Inc.), Maccherone "Ma·Ma (registered trademark) Salad Macaroni (manufactured by Nisshin Seifun Group Inc.), and Penne "Ma·Ma (registered trademark) Penne (manufactured by Nisshin Seifun Group Inc.)" were prepared. Pasta (i.e., "cooked pasta") was prepared under the same conditions as in the method of Liquid preparation for cooking 17, except that the boil time was varied to a time specified in each product using Liquid preparation for cooking 17 (straight-equivalent liquid seasoning), and the test was carried out under the same conditions. The results of this test were as good as those of the udon, especially good for long pasta spaghetti. It is confirmed that the effect of the present invention was exhibited in pasta in general, and that it was particularly favorable in the spaghetti, which is subjected to a significant change in texture by heating.

### <EXPERIMENTAL EXAMPLE 3>

In EXPERIMENTAL EXAMPLE 3, several concentrated liquid preparations for cooking for udon noodles were prepared according to the formulation shown in Tables 3-1 to 3-3. The sample of liquid preparation for cooking was prepared as in EXPERIMENTAL EXAMPLE 1. In Liquid preparations for cooking 18 to 20, the content of rapeseed oil was increased to three or more times (from 50 to 160 parts by mass) and the lecithin content was set at 3 levels (0.7, 10.4, and 16.0 parts by mass), so that three samples in total were prepared. These concentrated samples were then analyzed to determine the lecithin concentration, the oil concentration, the pH, the Brix, the salt concentration, and the viscosity at 20°C. The results are shown in Tables 3-1 to 3-3. These samples were diluted so as to have a concentration at the time of cooking, and were analyzed based on the straight-equivalent liquid seasonings to determine the lecithin concentration, the oil concentration, the ratio of the lecithin to the oil, the pH, the Brix, the salt concentration, the ratio of lysed lecithin to common salt, and the static viscosity at 80°C. The results are also shown in Tables 3-1 to 3-3.

According to the analytical results each sample of liquid preparations for cooking (straight- equivalent liquid seasonings), the lecithin concentration was 0.02 mass% at the lowest (Liquid preparation for cooking 18) and 0.34 mass% at the highest (Liquid preparation for cooking 20). The oil concentration had a constant value (3.9 mass%). Consequently, the rate of the lecithin to the oil was 0.4 mass% at the lowest (Liquid preparation for cooking 18) and 8.6 mass% at the highest (Liquid preparation for cooking 20). The pH was 5.0 at the lowest (Liquid preparations for cooking 19 and 20) and 5.1 at the highest (Liquid preparation for cooking 18). The Brix was 2.9 at the lowest (Liquid preparation for cooking 18) and 3.2 at the highest (Liquid preparation for cooking 20). The salt concentration was 1.3 mass% at the lowest (Liquid preparation for cooking 18) and 1.5 mass% at the highest (Liquid preparations for cooking 19 and 20). The ratio of lysed lecithin to common salt was 0.9 mass% at the lowest (Liquid preparation for cooking 18) and 16.8 mass% at the highest (Liquid preparation for cooking 20). Liquid preparations for cooking 18 to 20 showed relatively medium viscosity

Udon was actually cooked using each sample of the resulting liquid preparations for cooking, and sensory evaluation was carried out to taste and evaluate the finished udon as in EXPERIMENTAL EXAMPLE 1. The results are also shown in Tables 3-1 to 3-3.

**[Table 3-1]**

| | | Starch syrup added | | | | |
|---|---|---|---|---|---|---|
| | | Liquid cooking preparation 13 | Liquid cooking preparation 14 | Liquid cooking preparation 15 | Liquid cooking preparation 16 | Liquid cooking preparation 17 |
| **<Formulations of liquid cooking preparations >** | | | | | | |
| Xanthan gum | Parts by mass | 6.4 | 6.4 | 6.4 | 6.4 | 6.4 |
| Rapeseed oil | Parts by mass | 50 | 50 | 50 | 50 | 50 |
| Chicken oil | Parts by mass | 21 | 21 | 21 | 21 | 21 |
| Lecithin (emulsifier) | Parts by mass | 0.7 | 10.4 | 16.0 | 10.4 | 10.4 |
| Egg yolk | Parts by mass | 0 | 0 | 0 | 0 | 0 |
| Starch syrup | Parts by mass | 20 | 20 | 20 | 40 | 60 |
| Umami seasoning | Parts by mass | 23 | 23 | 23 | 23 | 23 |
| Common salt | Parts by mass | 51 | 51 | 51 | 51 | 51 |
| Chicken extract | Parts by mass | 50 | 50 | 50 | 50 | 50 |
| Soup stock (dashi) | Parts by mass | 10 | 10 | 10 | 10 | 10 |
| Cereal vinegar | Parts by mass | 10 | 10 | 10 | 10 | 10 |
| Water | | Remnant | Remnant | Remnant | Remnant | Remnant |
| Total | Parts by mass | 1000 | 1000 | 1000 | 1000 | 1000 |
| **<Analytical values of liquid cooking preparations >** | | | | | | |
| Lecithin concentration | mass % | 0.07% | 1.01% | 1.55% | 1.01% | 1.01% |
| Oil concentration | mass % | 7.1% | 7.1% | 7.1% | 7.1% | 7.1% |
| pH | | 4.99 | 5.02 | 5.65 | 5.09 | 5.00 |
| Brix | | 16.8 | 17.4 | 17 | 20.2 | 22.4 |
| Salt concentration | mass % | 6.1 | 5.6 | 6.5 | 6.2 | 5.2 |
| Viscosity (20°C) | mPa·s | 1757 | 1742 | 1901 | 2238 | 2294 |
| **<Analytical values of straight-equivalent liquid seasonings >** | | | | | | |
| Dilution factor | | 4.6 | 4.6 | 4.6 | 4.6 | 4.6 |
| Lecithin concentration | mass % | 0.02% | 0.22% | 0.34% | 0.22% | 0.22% |
| oil concentration | mass % | 1.5% | 1.5% | 1.5% | 1.5% | 1.5% |
| Ratio of lecithin to oil | mass % | 1.0% | 14.2% | 21.8% | 14.2% | 14.2% |
| pH | | 5.12 | 5.21 | 5.13 | 5.2 | 5.14 |
| Brix | | 3.9 | 4.0 | 3.8 | 4.4 | 5.0 |
| Salt concentration | mass % | 1.3 | 1.2 | 1.4 | 1.3 | 1.1 |
| Ratio of lysed lecithin to common salt | mass % | 0.9% | 13.4% | 17.8% | 12.3% | 14.6% |
| Static viscosity (80°C) | mPa·s·g/cm³ | 30 | 31 | 34 | 36 | 35 |
| **<Foodstuff used>** | | | | | | |
| | | Udon | Udon | Udon | Udon | Udon |
| **<Sensory evaluation>** | | | | | | |
| Deliciousness | | 4 | 5 | 4 | 4 | 4 |
| Mellowness | | 4 | 5 | 4 | 5 | 5 |
| Astringent saltiness | | 4 | 4 | 4 | 5 | 5 |
| Koku (richness) | | 5 | 5 | 3 | 5 | 4 |
| Lecithin smell | | 5 | 5 | 3 | 4 | 4 |
| Stewed flavor and texture | | 5 | 5 | 5 | 5 | 4 |
| Comprehensive evaluation | | A | A | A | A | A |

**[Table 3-2]**

| | | Salad oil added | | | Egg yolk added |
|---|---|---|---|---|---|
| | | Liquid cooking preparation 18 | Liquid cooking preparation 19 | Liquid cooking preparation 20 | Liquid cooking preparation 21 |
| **<Formulations of liquid cooking preparations >** | | | | | |
| Xanthan gum | Parts by mass | 6.4 | 6.4 | 6.4 | 4.8 |
| Rapeseed oil | Parts by mass | 160 | 160 | 160 | 50 |
| Chicken oil | Parts by mass | 21 | 21 | 21 | 21 |
| Lecithin (emulsifier) | Parts by mass | 0.7 | 10.4 | 16.5 | 0.0 |
| Egg yolk | Parts by mass | 0 | 0 | 0 | 80 |
| Starch syrup | Parts by mass | 0 | 0 | 0 | 0 |
| Umami seasoning | Parts by mass | 23 | 23 | 23 | 23 |
| Common salt | Parts by mass | 51 | 51 | 51 | 51 |
| Chicken extract | Parts by mass | 50 | 50 | 50 | 50 |
| Soup stock (dashi) | Parts by mass | 10 | 10 | 10 | 10 |
| Cereal vinegar | Parts by mass | 10 | 10 | 10 | 10 |
| Water | | Remnant | Remnant | Remnant | Remnant |
| Total | Parts by mass | 1000 | 1000 | 1000 | 1000 |

| **<Analytical values of liquid cooking preparations >** | | | | | |
|---|---|---|---|---|---|
| Lecithin concentration | mass % | 0.07% | 1.01% | 1.60% | 0.05% |
| Oil concentration | mass % | 18.1% | 18.1% | 18.1% | 7.1% |
| pH | | 4.93 | 4.99 | 4.95 | 5.10 |
| Brix | | 15.4 | 15.6 | 15.8 | 20.3 |
| Salt concentration | mass % | 6.1 | 7.0 | 6.9 | 6.1 |
| Viscosity (20°C) | mPa·s | 2059 | 1976 | 2101 | 1515 |

| **<Analytical values of straight-equivalent liquid seasonings >** | | | | | |
|---|---|---|---|---|---|
| Dilution factor | | 4.6 | 4.6 | 4.6 | 4.6 |
| Lecithin concentration | mass % | 0.02% | 0.22% | 0.35% | 0.01% |
| oil concentration | mass % | 3.9% | 3.9% | 3.9% | 1.5% |
| Ratio of lecithin to oil | mass % | 0.4% | 5.6% | 8.8% | 1% |
| pH | | 5.1 | 5 | 5 | 5.22 |
| Brix | | 2.9 | 3.0 | 3.2 | 4.2 |
| Salt concentration | mass % | 1.3 | 1.5 | 1.5 | 1.3 |
| Ratio of lysed lecithin to common salt | mass % | 0.9% | 10.8% | 17.3% | 0.6% |
| Static viscosity (80°C) | mPa·s·g/cm³ | 31 | 30 | 31 | 22 |

| **<Foodstuff used>** | | | | | |
|---|---|---|---|---|---|
| | | Udon | Udon | Udon | Udon |

| **<Sensory evaluation>** | | | | | |
|---|---|---|---|---|---|
| Deliciousness | | 5 | 5 | 3 | 4 |
| Mellowness | | 4 | 5 | 4 | 5 |
| Astringent saltiness | | 5 | 5 | 4 | 5 |
| Koku (richness) | | 5 | 5 | 4 | 5 |
| Lecithin smell | | 5 | 5 | 4 | 4 |
| Stewed flavor and texture | | 2 | 4 | 4 | 5 |
| Comprehensive evaluation | | D | B | B | B |

**[Table 3-3]**

| | | Pasta | Concentration factor varied | |
|---|---|---|---|---|
| | | Liquid cooking preparation 22 | Liquid cooking preparation 23 | Liquid cooking preparation 24 |
| **<Formulations of liquid cooking preparations >** | | | | |
| Xanthan gum | Parts by mass | 4.8 | 2.4 | 9.6 |
| Rapeseed oil | Parts by mass | 50 | 25 | 100 |
| Chicken oil | Parts by mass | 21 | 11 | 42 |
| Lecithin (emulsifier) | Parts by mass | 7.5 | 3.8 | 15.0 |
| Egg yolk | Parts by mass | 0 | 0 | 0 |
| Starch syrup | Parts by mass | 0 | 0 | 0 |
| Umami seasoning | Parts by mass | 23 | 11 | 46 |
| Common salt | Parts by mass | 51 | 26 | 102 |
| Chicken extract | Parts by mass | 50 | 25 | 100 |
| Soup stock (dashi) | Parts by mass | 10 | 5 | 20 |
| Cereal vinegar | Parts by mass | 10 | 5 | 20 |
| Water | | Remnant | Remnant | Remnant |
| Total | Parts by mass | 1000 | 1000 | 1000 |

| **<Analytical values of liquid cooking preparations >** | | | | |
|---|---|---|---|---|
| Lecithin concentration | mass % | 0.73% | 0.36% | 1.46% |
| Oil concentration | mass % | 7.1% | 3.6% | 14.2% |
| pH | | 4.99 | 5.08 | 4.91 |
| Brix | | 15.9 | 8.6 | 34.8 |
| Salt concentration | mass % | 6.1 | 3.0 | 12.9 |
| Viscosity (20°C) | mPa·s | 1441 | 214 | 7328 |

| **<Analytical values of straight-equivalent liquid seasonings >** | | | | |
|---|---|---|---|---|
| Dilution factor | | 4.6 | 2.3 | 9.2 |
| Lecithin concentration | mass % | 0.16% | 0.16% | 0.16% |
| oil concentration | mass % | 1.5% | 1.5% | 1.5% |
| Ratio of lecithin to oil | mass % | 10% | 10% | 10% |
| pH | | 5.06 | 5.02 | 5.03 |
| Brix | | 4.2 | 4.1 | 4.0 |
| Salt concentration | mass % | 1.3 | 1.3 | 1.4 |
| Ratio of lysed lecithin to common salt | mass % | 9.5% | 9.1% | 8.5% |
| Static viscosity (80°C) | mPa·s·g/cm³ | 19 | 20 | 21 |

| **<Foodstuff used>** | | | | |
|---|---|---|---|---|
| | | Pasta | Udon | Udon |

| **<Sensory evaluation>** | | | | |
|---|---|---|---|---|
| Deliciousness | | 5 | 5 | 5 |
| Mellowness | | 5 | 5 | 5 |
| Astringent saltiness | | 5 | 5 | 5 |
| Koku (richness) | | 5 | 5 | 5 |
| Lecithin smell | | 5 | 5 | 5 |
| Stewed flavor and texture | | 5 | 5 | 4 |
| Comprehensive evaluation | | A | A | A |

According to the comprehensive evaluation, Liquid preparations for cooking 19, 20 were ranked as "B" and liquid preparation for cooking 18 as "C". Accordingly, the comparison of Liquid preparations for cooking 6 to 8 having reduced oil concentrations of EXPERIMENTAL EXAMPLE 1 with Liquid preparations for cooking 18 to 20 of EXPERIMENTAL EXAMPLE 3 showed that the former liquid preparations for cooking tended to give favorable results. The reason for this is presumed to be that the former are adjusted such that the oil concentration in the liquid preparation for cooking (straight-equivalent liquid seasoning) is 0.1 mass% to 2 mass%. Furthermore, the amounts of xanthan gum in the formulation of Liquid preparation for cooking 22 were adjusted to prepare samples having a static viscosity (80°C) of 30, 40, 60, 80, 100, and 120 mPa·s*g/cm³, respectively. The samples were tested in the same manner as Liquid preparation for cooking 22. As a result, in the case of the sample having a static viscosity (80°C) of 120 mPa·s*g/cm³, the fluidity of the seasoning decreased, so that the seasoning components hardly penetrated the ingredients. Furthermore, the convective heating could not be performed, resulting in remarkably declined results of comprehensive evaluation (average point of the comprehensive evaluation: 1 point or "E"). In the case of the samples having a static viscosity (80°C) of 100 mPa·s*g/cm³ and 80 mPa·s*g/cm³, the fluidity of the liquid preparations for cooking increase, so that the seasoning components readily penetrated the ingredients, resulting in remarkably improved results of comprehensive evaluation (average point of the comprehensive evaluation: 4 point or "B"). In the case of the samples having a static viscosity (80°C) of 60 mPa·s*g/cm³, 40 mPa·s*g/cm³, and 30 mPa·s*g/cm³, the results of comprehensive evaluation were highest (average point of the comprehensive evaluation: 5 point "A"), and especially improvement of richness was significant. Furthermore, the same sample as Liquid preparation for cooking 22 was prepared except that "lecithin (emulsifier)" in the formulation was replaced with an equal amount of "whey protein concentrate" and tested in the same manner as Liquid preparation for cooking 22, resulting in the same results as Liquid preparation for cooking 22. The detailed experimental conditions in EXPERIMENTAL EXAMPLEs 1 to 3 (Liquid preparations for cooking 1 to 21, 23 and 24) are as follows.

### <Preparation of straight-equivalent liquid seasoning>

The dilution factor of Liquid preparations for cooking 1 to 21 was 4.6, and thus water (156.5 g) was added to each liquid preparation for cooking (43.5 g) to prepare a "straight-equivalent liquid seasoning.

The dilution factor of Liquid preparations for cooking 23 was 2.3, and thus water (113.0 g) was added to the liquid preparations for cooking (87.0 g) to prepare a "straight-equivalent liquid seasoning".

The dilution factor of Liquid preparations for cooking 24 was 9.2, and thus water (178.3 g) was added to the liquid preparations for cooking (21.7 g) to prepare a "straight-equivalent liquid seasoning".

### <Placement of foodstuffs>

(1) The "straight-equivalent liquid seasoning" (200 g) was weighed into a heating container (stainless steel mug).
(2) "Katokichi (registered trademark) Frozen Sanuki Udon (manufactured by TableMark Co., Ltd.)" was boiled in boiling water in a pot different from that used in Step (1) for 1 minute to prepare "udon".
(3) The boiled "udon" (30 g) prepared in Step (2) was immediately weighed before the "udon" was cooled to room temperature, and placed into the "straight-equivalent liquid seasoning" in the heating container used in Step (1). The placed "udon" was completely immersed in the liquid seasoning.
(4) The "straight-equivalent liquid seasoning" in the stainless steel mug was heated convectively using an IH cooking heater at over 80°C for 1 minute while the "udon" was being immersed under the liquid surface.
(5) The "udon" was taken from the liquid seasoning and subjected to tasting evaluation by 20 sensory assessors. The detailed experimental conditions for Liquid preparation for cooking 22 are as follows.

### <Preparation of straight-equivalent liquid seasoning>

The dilution factor of Liquid preparations for cooking 22 was 4.6, and thus water (156.5 g) was added to the liquid preparations for cooking (43.5 g) to prepare a "straight-equivalent liquid seasoning.

### <Placement of foodstuffs>

(1) The "straight-equivalent liquid seasoning" (200 g) was weighed into a heating container (stainless steel mug).
(2) "Ma·Ma (registered trademark) spaghetti 1.4 mm (manufactured by Nisshin Seifun Group Inc.)" was boiled in boiling water in a pot different from that used in Step (1) for 5 minutes to prepare "pasta".
(3) The boiled "Pasta" (30 g) prepared in Step (2) was immediately weighed before the pasta was cooled to room temperature, and placed into the "straight-equivalent liquid seasoning" in the heating container used in Step (1).

The placed "pasta" was completely immersed in the liquid seasoning.
(4) The "straight-equivalent liquid seasoning" in the stainless steel mug was heated convectively using an IH cooking heater at over 80°C for 1 minute while the "pasta" was being immersed under the liquid surface.
(5) The "pasta" was taken from the liquid seasoning and subjected to tasting evaluation by 20 sensory assessors.

### <EXPERIMENTAL EXAMPLES 4 to 6>

In EXPERIMENTAL EXAMPLE 4, a concentrated liquid preparation for cooking for udon noodles was prepared according to the formulation shown in Tables 3-1 to 3-3. In this example, egg yolk was used instead of lecithin, and a sample of the liquid preparation for cooking was prepared as in EXPERIMENTAL EXAMPLE 1. In EXPERIMENTAL EXAMPLE 5, a concentrated liquid preparation for cooking for pasta noodles was prepared according to the formulation shown in Tables 3-1 to 3-3 and the preparation procedure of EXPERIMENTAL EXAMPLE 1. In EXPERIMENTAL EXAMPLE 6, a concentrated liquid preparation for cooking for udon noodles was prepared according to the formulation shown in Tables 3-1 to 3-3. In this example, the concentration factor was varied and two samples of each liquid preparation for cooking were prepared according to the procedure of EXPERIMENTAL EXAMPLE 1. In detail, Liquid preparation for cooking 23 was of a 2.3-fold concentrated type, and Liquid preparation for cooking 24 was of a 9.2-fold concentrated type. These samples were then analyzed in a concentrated state to determine the lecithin concentration, the oil concentration, the pH, Brix, the salt concentration, and the viscosity at 20°C. The results are shown in Tables 3-1 to 3-3. Furthermore, each samples was diluted so as to have a concentration at the time of cooking, and was analyzed based on the straight-equivalent liquid seasonings to determine the lecithin concentration, the oil concentration, the ratio of the lecithin to the oil, the pH, the Brix, the salt concentration, the ratio of lysed lecithin to common salt, and the static viscosity at 80°C. The results are also shown in Tables 3-1 to 3-3.

The results of the sensory evaluation, such as astringent saltiness, richness, and stewed flavor and texture, of Liquid preparations for cooking 22, 23, and 24 were generally good, being rated as "A" in the comprehensive evaluation.

### <Conclusion>

These results demonstrate that a freshly cooked texture and a stewed flavor and texture can be imparted to cooked dishes without a long-time cooking according to the above examples of the present embodiment. In other words, cooking starch-based foods such as noodles and cooking ingredients placed in the liquid seasoning of the present invention can provide cooked dishes having a combination of the texture of freshly cooked ingredients and stewed flavor and texture, which has never been achieved. The present invention eliminates a long heating process to impart a stewed flavor and texture, so that industrial applications such as eating out or home-meal replacement are expected in addition to the domestic applications.

Technical concepts supported by the above-described embodiments are listed below:
(1) In any one of Means 1 to 8, the starch syrup concentration in the liquid preparation for cooking (when used as a straight-equivalent liquid seasoning) is adjusted to be 0.1 mass% to 5 mass% (preferably 0.2 mass% to 4 mass%).
(2) A liquid preparation for cooking comprising oil, common salt, and an emulsifier, further comprising pH adjuster, Brix adjuster, and viscosity modifier, the mass ratio of the emulsifier to the oil being 0.1% or more, wherein the amounts of oil, the emulsifier, the pH adjuster, the Brix adjuster, the viscosity modifier are adjusted such that the resultant liquid preparation for cooking has a pH of from 4.0 to 7.0, a Brix of from 1 to 15, an oil concentration of from 0.1 mass% to 4 mass%, an emulsifier concentration is 1 mass% or less, and a static viscosity of 100 mPa·s*g/cm³ or less at 80°C, when the liquid preparation for cooking is used as a straight-equivalent liquid seasoning.
(3) An n-fold concentrated type liquid preparation for cooking comprising oil, common salt, and an emulsifier, further comprising pH adjuster, Brix adjuster, and viscosity modifier, the ratio of the emulsifier to the oil being 0.1 mass% or more, wherein the amounts of oil, the emulsifier, the pH adjuster, the Brix adjuster, the viscosity modifier are adjusted such that the resultant liquid preparation for cooking has a pH of from 4.0 to 7.0, a Brix of from 1 to 15, an oil concentration of from 0.1 mass% to 4 mass%, an emulsifier concentration is 1 mass% or less, and a static viscosity of 100 mPa·s*g/cm³ or less at 80 °C, when the liquid preparation for cooking is n-fold diluted for cooking,.
(4) In the technical concepts (2) or (3), a liquid preparation for cooking is characterized in that the emulsifier is lecithin or lysed lecithin.

Terms used in this specification will now be described.

The term "stewing" generally refers to a method of heating a foodstuff placed in a liquid medium by heating the liquid.

The term "stew cooking" generally refers to a method of cooking a foodstuff involving heating with a liquid seasoning, for example, at a temperature of about 80°C to 99°C in a heating container, and typically refers to a method of cooking the foodstuff involving a repeated three processes: 1) the heat propagates into the foodstuff by convection heating, 2) the components of the liquid seasoning migrates into and absorbed in the foodstuff, and 3) the components of the foodstuff are dissolved in the liquid seasoning.

The term "stewed flavor and texture" generally refers to "flavor and texture achieved by an ingredient that is well impregnated with seasonings, does not exhibit astringent saltiness, and has its own umami texture, and mainly refers to a favorable taste or flavor, which is imparted to the foodstuff by the repeated process of absorption of the components dissolved in Process 3) by the foodstuffs in Process 2) resulting in an equilibrium between the liquid seasoning and the components of the foodstuff.

The term "cooking" mainly refers to a cooking process involving increasing the temperature of a food by applying heat directly to the food using fire or microwave, or by indirectly applying heat through a medium such as water or air (baking, simmering, stir-frying, steaming). In general, the heating temperature in cooking is mainly about 80°C to 99°C.

The term "cooked dish" mainly refers to starch-based foods in general that are not usually eaten without being cooked, and are eaten after being cooked and mainly refers to foods and noodles (such as pasta) mainly composed of gluten-containing starch, causing a variation in texture by heating.

The term "freshly cooked texture" mainly refers to a desirable state of chewy noodles without excess softening after long-time cooking, or a state of a hot pot dish of ingredients less disintegrated and maintaining their own textures or a long-time cooking.

The term "convective heating" mainly refers to a heating process in which heated liquid circulates, for example, in such a way that fluid liquid in a heating container such as a pan is heated to a temperature of about 80°C to 99°C to decreases its density and to move to the upper part in the vertical direction, resulting in thermal convection.
The liquid seasoning having a static viscosity exceeding 100mPa·s*g/cm³ at a heated temperature of 80°C has poor fluidity, so that thermal convection does not occur sufficiently during heating and convection heating cannot be performed. Since thermal convection is generated by heating the lower part of the container, liquid in a container is heated by heat from a container such as a pot in example convection heating. In this case, thermal convection can be carried out by heat transferring through the pan and heating the liquid (conduction heating) and generating thermal convection in the heated liquid.

The term "cooking involving heating foodstuffs together with liquid seasonings" refers to cooking of foodstuffs immersed in a liquid seasoning functions as a heating medium that is circulated by heat convection in a heating container such as a pot.

The term "food mainly composed of starch" refers to, for example, a food containing starch as a component which accounts for the largest proportion among the solid contents of the food. The term "starch-based food" refers to a food produced mainly from starch or foodstuffs rich in starch (for example, cereals such as rice, wheat, and potatoes), including pasta.

The term "noodle" refers to a product made by extending dough composed of a powdered cereal such as wheat flour or starch, water and salt into a long and thin form (udon and long pasta such as spaghetti belong to noodles).

"Pasta" is an Italian word that has almost the same concept with "noodles", referring to a paste mainly composed of wheat flour (fresh pasta) and a dried product (dried pasta). The main raw material is wheat flour, and other materials such as water, salt, and chicken eggs are used. Pasta can be broadly divided into two types, long noodle pasta represented by spaghetti and small short pasta represented by macaroni. In addition, there are other shapes like dumplings and plates. For example, the following types of pasta are available.

Examples of long pasta include spaghetti, spaghettini, fedelini, vermicelli, capellini, linguine, bucatini, chitarra, tagliatelle, pappardelle, bigoli, pizzoccheri, passatelli, stroncatelli, tagliolini, trenette, udon (Japanese pasta), and ramen (Chinese pasta).

Examples of short pasta include maccherone, penne, rigatoni, farfalle, conchiglie, fusilli, ruote, orecchiette, garganelli, gasse, stelline, zite, casarecce.

Examples of other pastas include ravioli, tortelli, tortellini, anolini, calzonicchi, cannelloni, casonsei, cialzons, culingiones, panzerotti, lasagne, gnocchi, cuscus, risoni, maltagliati, and pasta mista.

The term "pasta sauce" generally refers to a liquid seasoning used for cooking or seasoning of pasta, and refers to, for example, a liquid seasoning used for seasoning of in pasta after boiling.

The following types of pasta sauce are available.

Examples of oil sources include "aglio, olio e pepperoncino". Examples of tomato sauces include Arrabbiata, Amatriciana, Puttanesca, Pescatore, and Marinara. Examples of meat sauces include Bolognese. Examples of cream sauces include Alfredo and Carbonara.

Examples of basil sauces include Genovese, Pesto trapanese, and examples of soup-based sources include vongole, Marinata and Scheveningen. Other examples include Käsespätzle, Boscaiola, Nero, and Japanese style sauce.

The term "nerimono (paste)" refers to paste generally produced by kneading moist food.

The term "udon (Japanese pasta)" refers to a type of noodle like long pasta eaten in Japan in general and having a certain width and thickness, which is made by kneading wheat flour and cut long.

The term "aeru (mix)" refers to mixing seasonings with foodstuffs in general.

The term "permeation" mainly refers to a phenomenon of components of a liquid seasoning that are migrated into a foodstuff such as pasta immersed in the liquid seasoning.

The term "n-fold concentrated type" refers to a seasoning which is used after 1 unit weight of the liquid seasoning or solid seasoning is diluted with a (n-1) weight unit of dilution liquid such as water, and thus refers to a liquid seasoning having concentrated components, based on the assumption of dilution with water before use.

Usually, a container of the n-fold concentrated type liquid seasoning discloses a prescription on such dilution. In this case, the dilution factor of the liquid seasoning is expressed as "n-fold", and the components of the liquid seasoning after dilution are 1/n-fold.

"Straight-equivalent" refers to a diluted state to 1/n-fold by adding a diluting liquid such as water to an n-fold concentrated liquid seasoning. In the case where the liquid seasoning is of a 1-fold concentrated type, the term indicates a state where no water is added.

The term "emulsifier" typically works at the interface between materials which are inherently immiscible, such as water and oil, and has the effect of creating a homogeneous state, for example, described in paragraph [0029]. Proteins that are easy to associate with lipids such as whey protein can also be used as emulsifiers. Examples of "oil" include animal and vegetable fats and oils separated from a foodstuff legally permitted for use in foods in Japan, such as olive oil, in addition to those described in paragraph [0027].

The term "oil concentration" refers to the percentage of animal and vegetable fats and oils to be used for edible purposes contained in the liquid seasoning.

The term "common salt" mainly refers to substances containing sodium chloride as its main component, produced by the drying of seawater and the extraction of rock salt.

The term "emulsifier in an amount of 0.1 mass% or more with respect to the oil" refers to a weight ratio of 0.1% or more of the emulsifier to the oil in the formulation.

In the case where the emulsifier is a food having an emulsifying action such as egg yolk or whey protein, the weight of the blended emulsifier can be calculated from the content of the component having emulsifying action. For example, the content of lecithin in egg yolk and the content of protein in whey protein can be regarded as the weight of the blended emulsifier. In the case where a plurality of emulsifiers are used, the total of them can be regarded as the weight of the blended emulsifiers.

The term "PH" refers to an index of the properties (degree of acidity/alkalinity) of an aqueous solution. In the examples, a pH meter (HORIBA F-51) calibrated at three points of pH 9 (borate) standard solution, pH 7 (neutral phosphate) standard solution and pH 4 (phthalate) measures the values for the liquid seasonings adjusted to 20°C. In addition, the electrode was immersed in the liquid seasoning for 2 minutes, and the stable value was taken as a measured value.

The term "Brix" refers to the scale of the observed value of a sugar meter (refractometer). In a seasoning liquid containing various dissolved components, the Brix value is close to a soluble solid content (percentage of soluble solids contained in the sample). In the examples, the value of a liquid solution was measured at 20°C with a Brix meter (ATAGO PR-201) that was reset to zero with water.

The term "Lecithin" is a generic name of a mixture mainly composed of various phospholipids taken out from animals (e.g., egg yolk etc.) and plants (e.g., soybeans etc.) and is described, for example, in paragraph [0029], referring to phosphatidylcholine in a narrow sense.

The term "lysed lecithin" refers to a substance that is typically produced by hydrolysis of lecithin, and is emulsifiable to form a stable emulsion against pH and a variation in temperature, compared to lecithin.

The "mass ratio of lecithin to common salt" refers to the weight ratio of lecithin to sodium chloride in the formulation.

The term "hot pot dish" refers to a dish that is heated in a heating container such as a pot while foodstuffs are immersed in a liquid seasoning (e.g., bouillabaisse).

The "starch syrup" generally includes those that are legally permitted for use in foods in Japan such as a mucous sweetener which is a mixture of glucose, maltose, and dextrin, made by hydrolysis of starch.

The term "static viscosity" refers to a measure of the force required to vibrate an object in liquid, which is described in the following document: Naoto IZUMO, and Atsushi KOIWAI "Technological Background and Latest Market Requirements concerning "Static Viscosity" Measurement with a Tuning-fork Vibration Viscometer ", Proceedings of Asia-Pacific Symposium on Measurement of Weight, Force and Torque (APMF 2009) June 1-4, 2009, Tokyo, Japan, p. 51-57.

In the present invention, definition of the fluidity at the time of cooking requires to measure the static viscosity at a heated temperature of at 80°C, and accordingly a vibration viscometer used for measuring the static viscosity can be suitably used since it barely affects the temperature of the sample at the time of measurement. The fluidity can be also calculated from the viscosity (mPa·s) at 80°C and the density (g/cm³) at 80°C.

The term "heating container" refers to a container for cooking having a concave portion for containing food (e.g., a pot or a frying pan) that can cook the food inside the container by heating the container.

The term "astringent saltiness" refers to the sharp salty taste of sodium chloride itself. For example. Sea water salt with a high content of sodium chloride (with a low content of minerals, for example, magnesium chloride, other than sodium chloride) has a stronger astringent saltiness.

The term "deliciousness" refers to preference, such as taste, texture, and flavor in comprehensive consideration.

The term "mellowness" mainly refers to softness and mildness of mouthfeel.

The term "koku (richness)" is also commonly referred to as kokumi, which refers to a taste that can be felt from foods, such as dishes containing a variety of foodstuffs and cooked for a long time (e.g., stew), foods having been aged for a long time (e.g., cheese) and foods containing much fat (e.g., meat). In other words, kokumi is a taste created by a mixture of a variety of foodstuffs or a taste of foodstuffs that have undergone long-term production process.

The "richness" is also enhanced by peptides, such as Glutathione, and γ-Glu-Val-Gly. For details, refer to, for example, the article: Motonaka Kuroda, Naohiro Miyamura, "Mechanism of the perception of "kokumi" substances and the sensory characteristics of the "kokumi" peptide, γ-Glu-Val-Gly ", Flavor magazine, February 24, 2015.

The term "incongruous smell" refers to a scent peculiar to, for example, lecithin, damaging an original preferred flavor of liquid seasoning.

The term "emulsifier concentration" refers to the concentration calculated from, for example, the weight of an emulsifier in a formulation. In the case where the emulsifier is a food having an emulsifying action such as egg yolk or whey protein, the weight of the emulsifier can be calculated from the content of components having emulsifying action. For example, the content of lecithin in egg yolk, and the content of proteins in whey is regarded as the weight of emulsifier. When multiple emulsifiers are used, the sum of them can be regarded as the weight of the emulsifier.

The term "pH adjuster" refers to an agent for adjusting the pH. Examples include compounds described in paragraph [0024] among foods or food additives legally permitted for use in foods in Japan.

The term "Brix adjuster" refers to an agent for adjusting the Brix. Examples include compounds described in paragraph [0026] among foods or food additives legally permitted for use in food in Japan.

The term "viscosity modifier" refers to an agent for adjusting the viscosity. Examples include compounds described in paragraph [0022] among foods or food additives legally permitted for use in food in Japan.

## Claims

1. A diluted liquid seasoning comprising oil, sodium chloride, and an emulsifier, the ratio of the emulsifier to the oil being 0.1 weight % or more,
wherein the liquid seasoning has a pH of from 4.0 to 7.0, a Brix of from 1 to 15, an oil concentration of from 0.1 weight % to 4 weight %, an emulsifier concentration of 1 weight % or less, and a static viscosity of 100mPa·s·g/cm³ or less measured at 80°C.

2. The liquid seasoning according to claim 1, wherein the emulsifier
is lecithin.

3. The liquid seasoning according to claim 2, wherein 20 weight % or
more of the lecithin is lysed.

4. The liquid seasoning according to claim 3, wherein the weight
ratio of the lysed lecithin to sodium chloride is from 1:2 to 1:2000.

5. The liquid seasoning according to any one of claims 1 to 4,
further comprising starch syrup.

6. The liquid seasoning according to any one of claims 1 to 5, which
is for use in cooking of a starch-based food or in hot pot cooking, preferably wherein the liquid seasoning is a pasta sauce.

7. A method of cooking a food, comprising using a liquid seasoning
containing oil, sodium chloride, and an emulsifier, the ratio of the emulsifier to the oil being 0.1 weight %
or more, wherein the liquid seasoning has been adjusted to have a pH of from 4.0 to 7.0, a Brix of from 1 to 15, an oil concentration of from 0.1 weight % to 4 weight %, an emulsifier concentration of 1 weight % or less, and a static viscosity of 100mPa·s·g/cm³ or less measured at 80°C.

8. The method of cooking according to claim 7, wherein the food is a
starch-based food, preferably pasta, for example long pasta, and the starch-based food is placed into the liquid seasoning and cooked via convection heating.

9. The method of cooking according to claim 7 or 8, wherein the
emulsifier is lecithin.

10. The method of cooking according to claim 9, wherein 20 weight
% or more of the lecithin is lysed.

11. The method of cooking according to claim 10, wherein the
weight ratio of the lysed lecithin to sodium chloride is from 1:2 to 1:2000.

12. The method of cooking according to any one of claims 7 to 11,
wherein the liquid seasoning further comprises starch syrup.

## Patentansprüche

1. Verdünnte Flüssigwürze, die Öl, Natriumchlorid und einen Emulgator umfasst, wobei das Verhältnis des Emulgators zu dem Öl 0,1 Gew.-% oder mehr beträgt, wobei die Flüssigwürze einen pH-Wert von 4,0 bis 7,0, einen Brixwert von 1 bis 15, eine Ölkonzentration von 0,1 Gew.-% bis 4 Gew.-%, eine Emulgatorkonzentration von 1 Gew.-% oder weniger und eine statische Viskosität von 100 mPa·s·g/cm³ oder weniger gemessen bei 80 °C hat.

2. Flüssigwürze nach Anspruch 1, wobei der Emulgator Lecithin ist.

3. Flüssigwürze nach Anspruch 2, wobei 20 Gew.-% oder mehr des Lecithins lysiert ist.

4. Flüssigwürze nach Anspruch 3, wobei das Gewichtsverhältnis des lysierten Lecithins zu Natriumchlorid im Bereich von 1:2 bis 1:2000 liegt.

5. Flüssigwürze nach einem der Ansprüche 1 bis 4, die ferner Stärkesirup umfasst.

6. Flüssigwürze nach einem der Ansprüche 1 bis 5, die zur Verwendung beim Kochen eines stärkebasierten Lebensmittels oder beim Kochen im Kochtopf dient, wobei die Flüssigwürze vorzugsweise eine Pastasoße ist.

7. Verfahren zum Kochen eines Lebensmittels, das die Verwendung einer Flüssigwürze beinhaltet, die Öl, Natriumchlorid und einen Emulgator enthält, wobei das Verhältnis des Emulgators zu dem Öl 0,1 Gew.-% oder mehr beträgt, wobei die Flüssigwürze auf einen pH-Wert von 4,0 bis 7,0, einen Brixwert von 1 bis 15, eine Ölkonzentration von 0,1 Gew.-% bis 4 Gew.-%, eine Emulgatorkonzentration von 1 Gew.-% oder weniger und eine statische Viskosität von 100 mPa·s·g/cm³ oder weniger gemessen bei 80 °C eingestellt wurde.

8. Kochverfahren nach Anspruch 7, wobei das Lebensmittel ein stärkebasiertes Lebensmittel, vorzugsweise Pasta, zum Beispiel lange Pasta ist und das stärkebasierte Lebensmittel in die Flüssigwürze gegeben und mittels Konvektionserhitzung gekocht wird.

9. Kochverfahren nach Anspruch 7 oder 8, wobei der Emulgator Lecithin ist.

10. Kochverfahren nach Anspruch 9, wobei 20 Gew.-% oder mehr des Lecithins lysiert ist.

11. Kochverfahren nach Anspruch 10, wobei das Gewichtsverhältnis des lysierten Lecithins zu Natriumchlorid im Bereich von 1:2 bis 1:2000 liegt.

12. Kochverfahren nach einem der Ansprüche 7 bis 11, wobei die Flüssigwürze ferner Stärkesirup umfasst.

## Revendications

1. Assaisonnement liquide dilué comprenant de l'huile, du chlorure de sodium et un émulsifiant, le rapport de l'émulsifiant à l'huile étant de 0,1 % en poids ou plus, dans lequel l'assaisonnement liquide a un pH de 4,0 à 7,0, un Brix de 1 à 15, une concentration d'huile de 0,1 % en poids à 4 % en poids, une concentration d'émulsifiant de 1 % en poids ou moins, et une viscosité statique de 100 mpA-s-g/cm³ ou moins mesurée à 80 ⁰C.

2. Assaisonnement liquide selon la revendication 1, dans lequel l'émulsifiant est la lécithine.

3. Assaisonnement liquide selon la revendication 2, dans lequel 20 % en poids ou plus de la lécithine sont lysés.

4. Assaisonnement liquide selon la revendication 3, dans lequel le rapport en poids de la lécithine lysée au chlorure de sodium est de 1:2 à 1:2000.

5. Assaisonnement liquide selon l'une quelconque des revendications 1 à 4, comprenant en outre du sirop d'amidon.

6. Assaisonnement liquide selon l'une quelconque des revendications 1 à 5, destiné à être utilisé dans la cuisson d'un aliment à base d'amidon ou dans la cuisson en marmite, de préférence dans lequel l'assaisonnement liquide est une sauce pour pâtes.

7. Procédé de cuisson d'un aliment, comprenant l'utilisation d'un assaisonnement liquide contenant de l'huile, du chlorure de sodium et un émulsifiant, le rapport de l'émulsifiant à l'huile étant de 0,1 % en poids ou plus, dans lequel l'assaisonnement liquide a été ajusté pour avoir un pH de 4,0 à 7,0, un Brix de 1 à 15, une concentration d'huile de 0,1 % en poids à 4 % en poids, une concentration d'émulsifiant de 1 % en poids ou moins, et une viscosité statique de 100 mpA-s-g/cm³ ou moins mesurée à 80 ⁰C.

8. Procédé de cuisson selon la revendication 7, dans lequel l'aliment est un aliment à base d'amidon, de préférence des pâtes, par exemple des pâtes longues, et l'aliment à base d'amidon est placé dans l'assaisonnement liquide et cuit par chauffage par convection.

9. Procédé de cuisson selon la revendication 7 ou 8, dans lequel l'émulsifiant est la lécithine.

10. Procédé de cuisson selon la revendication 9, dans lequel 20 % en poids ou plus de la lécithine sont lysés.

11. Procédé de cuisson selon la revendication 10, dans lequel le rapport en poids de la lécithine lysée au chlorure de sodium est de 1:2 à 1:2000.

12. Procédé de cuisson selon l'une quelconque des revendications 7 à 11, dans lequel l'assaisonnement liquide comprend en outre du sirop d'amidon.
